Europäisches Patentamt

(19) European Patent Office

Office européen des brevets

(11) Publication number: **0 000 264**
**B1**

(12) **EUROPEAN PATENT SPECIFICATION**

(45) Date of publication of patent specification: **10.02.82**

(51) Int. Cl.³: **C 07 C 143/00,**
**C 10 M 1/40**

(21) Application number: **78300065.6**

(22) Date of filing: **22.06.78**

(54) The production of highly basic calcium sulphonates.

(30) Priority: **04.07.77 GB 2793277**

(43) Date of publication of application:
**10.01.79 Bulletin 79/1**

(45) Publication of the grant of the European patent:
**10.02.82 Bulletin 82/6**

(84) Designated Contracting States:
**BE DE FR GB**

(56) References cited:
**US - A - 3 170 880**
**US - A - 3 429 811**
**US - A - 3 830 739**

(73) Proprietor: **Exxon Research and Engineering Company**
**P.O.Box 390 200 Park Avenue**
**Florham Park New Jersey 07932 (US)**

(72) Inventor: **Lenack, Alain Louis Pierre**
**11, Square des Chardonnerets Bonsecours**
**F-76240 Le Mesnil Esnard (FR)**
Inventor: **Tirtiaux, Robert**
**9, Rue du Parvis St Andre**
**F-76130 Mont Saint Aignan (FR)**

(74) Representative: **Bawden, Peter Charles**
**Esso Chemical Research Centre P.O. Box 1**
**Abingdon Oxfordshire, OX13 6BB (GB)**

Courier Press, Leamington Spa, England.

## The production of highly basic calcium sulphonates

The present invention relates to the production of highly basic calcium sulphonates and to lubricating oils containing such highly basic sulphonates. The term highly basic calcium sulphonate refers to the calcium salt of a sulphonic acid which contains a stoichiometric excess of calcium over and above that required to neutralise the sulphonic acid. Frequently the excess calcium is present in the form of colloidal calcium carbonate suspended in the calcium salt of the sulphonic acid.

These highly basic calcium sulphonates are particularly useful as additives in lubricating oils especially automotive lubricants where their high basicity neutralises acids formed during operation of the engine. In addition the dispersant effect of the calcium sulphonate retains particulate material in suspension in the oil thus inhibiting the formation of harmful deposits in the oil.

It is well-known to produce highly basic calcium sulphonates by carbonating a mixture of an alkylaryl sulphonic acid, calcium oxide or calcium hydroxide, hydrocarbon solvent or solvents, reaction promoters and optionally water. Typical solvents are the aromatics such as toluene or xylene or aliphatics such as hexane. The requirements of a highly basic calcium sulphonate that is to be used as a lubricant additive are that it should combine oil solubility, high basicity and low viscosity. The current trend replacing naphthenic mineral oils with paraffinic oils has resulted in increased difficulties of oil solubility leading to undesirably hazy lubricating oils.

An economic requirement of the process is that the mixture when reaction is complete should filter as quickly as possible.

It is the aim of the present invention to provide an economic process for the production of highly basic calcium sulphonates which have an acceptable solubility even in the more highly paraffinic mineral oils.

The present invention therefore provides a process for the production of highly basic calcium sulphonates comprising treating with carbon dioxide the reaction product of mixing

(i) a sulphonic acid or an alkaline earth metal sulphonate
(ii) calcium hydroxide
(iii) a hydrocarbon solvent
(iv) a $C_1$—$C_3$ alcohol
(v) water

optionally adding further calcium hydroxide, adding a diluent oil, removing the volatiles and obtaining the product by filtration wherein carbonation is effected at a temperature in the range 20°C to 35°C, preferably 20°C to 30°C, the amount of water is from 4 wt.% to 35 wt.% based on the total weight of calcium hydroxide and a stoichiometric excess of calcium hydroxide used.

The sulphonic acid that may be used in the reaction mixture includes oil soluble sulphonic acids and these may be natural or synthetic sulphonic acids, e.g. a mahogany or petroleum alkyl sulphonic acid, and alkyl sulphonic acid, or an alkaryl sulphonic acid. The alkyl sulphonic acid should preferably have at least 25 carbon atoms per molecule, and the alkaryl sulphonic acid (e.g. alkyl benzene sulphonic acid) should preferably have at least 18 carbon atoms in the alkyl chain. Most suitable are sulphonic acids having a molecular weight of between 300 and 700, e.g. between 400 and 500.

Instead of a sulphonic acid, an alkaline earth metal sulphonate (preferably having a molecular weight of between 300 and 700) can be used, for example a calcium sulphonate.

The sulphonic acid or sulphonate is generally obtained as a mineral oil solution preferably consisting of 50% to 90% more preferably 60% to 80% by weight of the sulphonic acid or sulphonate.

The hydrocarbon solvent may be an aromatic or aliphatic hydrocarbon. Aromatic hydrocarbons are preferred, and examples of these are toluene, xylene and ethyl benzene. Suitable aliphatic hydrocarbons include paraffinic hydrocarbons such as n-hexane, n-heptane, n-decane, n-dodecane, white spirit, naphtha or iso-paraffins and cyclic paraffins such as cyclohexane.

The $C_1$—$C_3$ alcohol that is used is preferably methanol since if other alcohols are used there is a tendency for gel formation to occur during carbonation.

We are aware of U.S. Patent 3,830,739 in which excess calcium hydroxide is used in the production of highly basic calcium sulphonates by carbonating a mixture of a sulphonic acid, volatile hydrocarbon solvent, methanol and calcium hydroxide under controlled conditions. We have found, however, that the presence of added water in the reaction mixture results in faster filtration, provided from 4 wt.% to 35 wt.% preferably 6 wt.% to 35 wt.% more preferably from 8 wt.% to 25 wt.% most preferably 15 wt.% to 25 wt.% is added based on the weight of calcium hydroxide in the reaction mixture. This amount of water generally corresponds to about 2.5 to 5 wt.% preferably 3 to 4 wt.% of water based on the total reaction mixture. We find that the presence of this amount of water enables a product with acceptable solubility in heavy paraffinic base stocks to be obtained.

These oils generally contain more than 50% paraffinic carbon atoms as determined by infra-red spectroscopy by the method of Günther Brandes described in the October and November of 1958 editions of Erdöl und Kohle. In particular, our invention yields products soluble in such paraffinic oils which have a viscosity at 38°C greater or equal to 500 SUS. The products also have improved filterability. The exact amount of water that should be used depends upon the amount of excess calcium hydroxide used and the purity of the calcium hydroxide.

We have found that the use of stoichiometric excess of calcium hydroxide leads to a product of improved oil solubility particularly in paraffinic mineral oils. By stoichiometric excess we mean an excess over that required to react with the sulphonic acid and the carbon dioxide. We have also found that the improved oil solubility may be achieved by introducing the excess of calcium hydroxide into the reaction mixture and controlling carbonation so that some unreacted calcium hydroxide remains or by carbonating the reaction mixture to completion of uptake of carbon dioxide and then adding extra calcium hydroxide before filtration, in this case the amount of water present at the start of carbonation should be 4 wt.% to 35 wt.% based on the total amount of calcium hydroxide used. We find that to achieve the improved oil solubility the product should exhibit alkalinity to phenolphthalein. We prefer that from 5 wt.% to 50 wt.% more preferably from 10 wt.% to 20 wt.% of the total weight of calcium hydroxide used constitute the excess. We have found that the rate at which the product filters and its solubility in heavy paraffinic oils depends upon the amount of water added and the quality of the calcium hydroxide and we prefer to use a calcium hydroxide containing less than 3 wt.% of calcium carbonate impurity preferably less than 1 wt.% of calcium carbonate.

Suitable diluent oils include hydrocarbon oils, particularly those of mineral origin. Oils which have viscosities of 15 to 30 cS at 38°C are very suitable. Alternatively other oils which may be used are the lubricating oils which are described later in the specification.

The relative proportions of the materials in the reaction mixture are not critical but we prefer that for every 350 parts by weight of the sulphonic acid from 150 to 350, preferably 250 to 300 parts by weight of the alcohol be used together with 300 to 800, preferably 400 to 600 part by weight of the hydrocarbon solvent and 180 to 210 parts by weight of calcium hydroxide.

The reaction mixture is at a temperature in the range 20°C to 35°C preferably 20°C to 30°C during carbonation since we find that if higher temperatures e.g. 50°C are used the product tends to be a grease whilst if lower temperatures such as 10°C are used the product tends to be milky. Where carbonation is continued to saturation point and the excess calcium hydroxide added later we find that from 95 to 115 parts by weight of carbon dioxide are taken up for every 350 parts by weight of sulphonic acid present in the reaction mixture.

After carbonation is complete and any excess calcium hydroxide added, we prefer to subject the reaction mixture to a soaking period before adding the diluent oil and before filtering since we find that this significantly increases the rate at which the mixture will filter. We prefer to hold the mixture at a temperature in the range 20°C to 35°C, preferably 25°C to 30°C for at least $\frac{1}{2}$ an hour, the product may be held at this temperature for many hours but for economic reasons we prefer to do so for about 1 hour. As a further modification the diluent oil may be added to the reaction mixture before the soaking step.

The reaction mixture is then heated to remove the volatiles, being the hydrocarbon solvent and the $C_1$—$C_3$ alcohol and then filtered generally using a filter aid to obtain the highly basic calcium sulphonate as the filtrate.

The overbased calcium sulphonate detergents prepared by the process of this invention are suitable for use as additives in lubricating oils, both mineral and synthetic.

The lubricating oil may be any animal, vegetable or mineral oil, for example petroleum oil fractions ranging from naphthas to spindle oil to SAE 30, 40 or 50 lubricating oil grades, castor oil, fish oils or oxidised mineral oil. In particular the products are useful in the paraffinic mineral oils as hereinbefore described in which previously known calcium sulphonates have limited solubility.

Suitable synthetic ester lubricating oils include diesters such as di-octyl adipate, dioctyl sebacate, didecyl azelate, didecyl adipate, didecyl succinate, didecyl glutarate and mixtures thereof. Alternatively the synthetic ester can be a polyester such as that prepared by reacting polyhydric alcohols such as trimethylolpropane and pentaerythritol with monocarboxylic acids such as butyric acid, caproic acid, caprylic acid and perlargonic acid to the corresponding tri- and tetra-esters.

Also complex esters may be used as base oils such as those formed by esterification reactions between a dicarboxylic acid, a glycol, and an alcohol and/or a monocarboxylic acid.

Other additives may be included in the lubricating oil together with the additive prepared by the process of this invention. The choice of additive will depend upon the use to which the lubricant is to be put and examples of suitable additives include the alkyl succinimide dispersants, copolymeric viscosity index improvers and the zinc dialkyldithiophosphate antiwear additives.

The present invention is illustrated but in no way limited by reference to the following examples.

In the examples the filtration rate was measured in a Buchner funnel for either 1 hour or until 500 grams of filtrate was obtained, whichever occurred sooner. A filter paper of 77 sq centimeters area was used at 150°C and 7 grams of filter aid Clarcel (Registered Trade Mark) DCB were formed into a layer over the filter paper.

Example 1

52 parts by weight of an alkylaryl sulphonic acid and 90 parts by weight of toluene were mixed in a reaction vessel until the sulphonic acid was completely dissolved. 41 parts of methanol and 6.7 parts

3

of water were added, the mixture stirred and 28.5 parts of calcium hydroxide (95% pure containing 3 wt.% calcium carbonate impurity) added whilst maintaining the temperature around 25°C.

Carbon dioxide was then passed through the reaction mixture at a rate of 4.2 parts per hour until no further carbon dioxide was absorbed which occurred after about 4 hours. The temperature was held in the range 25 to 30°C during the introduction of the carbon dioxide.

After carbonation had been completed a further 6 parts of calcium hydroxide were introduced and the mixture stirred for 1 hour at about 30°C. 46 parts of a paraffinic mineral oil were then added and the mixture heated to remove the volatiles, a toluene/water azeotrope distilled off at around 105°C and the remainder of the toluene was removed by stripping with nitrogen at 150°C.

Finally 7.5 parts of the filter aid Clarcel (Registered Trade Mark) DCB were added and the product filtered by the method described above to yield a filtrate of Total Base Number (TBN) in the range 300 to 320 mgs KOH/gram.

Various preparations, some comparative were carried out using the basic process described above but in some instances, carbonation was stopped before uptake was complete and in others the amount of calcium hydroxide added after carbonation and the amount of water included in the reaction mixture were varied. In each instance the product had a TBN around 300 and its filterability, appearance and solubility in a heavy paraffinic mineral oil having a viscosity of 600 SUS at 38°C and containing 60% paraffinic carbon atoms were as follows:

| $CO_2$ uptake | $Ca(OH)_2$ after Carbonation[1] | Amount $H_2O$[2] | Initial Solubility | Filterability $Kg/hr/m^2$ | Product Appearance |
|---|---|---|---|---|---|
| 75% max | 0 | 0 | Soluble | 20 | Clear |
| 85% max | 0 | 0 | Soluble | 55 | Slightly Hazy |
| 85% max | 0 | 7.5% | Soluble | 53 | Clear |
| 100% max | 0 | 0 | Insoluble | | milky |
| 100% | 15% | 0 | Soluble | 130 | Hazy |
| 100% | 5% | 7.5% | | Product Milky | |
| 100% | 10% | 7.2% | Soluble | 25 | Clear |
| 100% | 15% | 7.5% | Soluble | 25 | Clear |
| 100% | 20% | 6.5% | Soluble | 35 | Clear |
| 100% | 20% | 13.1% | Soluble | 80 | Slightly Hazy |
| 100% | 20% | 19.7% | Soluble | 120 | Clear |
| 100% | 20% | 26.3% | Soluble | 120 | Clear |

[1]Based on the initial amount of Calcium Hydroxide
[2]Based on the total amount of Calcium Hydroxide.

In all instances where water was included the products had an acceptable viscosity.

Solubility is assessed by adding 5 grams of the filtrate to 95 grams of the oil and visual observation of room temperature solubility.

Example 2

The process of Example 1 was repeated using a calcium hydroxide from a different source which was 98% pure and contained less than 1 wt.% calcium carbonate. In this Example all the calcium hydroxide was included in the initial reaction mixture and carbonation was stopped when 82% of the stoichiometric amount of carbon dioxide required to react with all the free calcium hydroxide had been taken up by the reaction mixture. Various quantites of water were added and the products obtained had the following properties:—

| Water wt.% on Total Amount $Ca(OH)_2$ | Filtration Rate $kg/hr/m^2$ | Solubilities at 5% Initial Oil 1 | Oil 2 | After 3 weeks Oil 1 |
|---|---|---|---|---|
| 6.5 | 52 | Clear | Clear | Clear |
| 8.5 | 82 | Clear | Clear | Clear |
| 9.8 | 146 | Clear | Clear | Clear |
| 11.1 | 225 | Clear | Hazy | Hazy |
| 13.0 | 270 | Clear | Hazy | Hazy |

In this Example 15 grams of the filter aid were added to every 500 grams of the sulphonate before filtration.

Oil 1 was the paraffinic oil used in Example 1 whilst oil 2 was a blend of 70 parts of the oil of Example 1 with 30 parts of a paraffinic oil containing 60% paraffinic carbon atoms and having a viscosity at 38°C of 2500 SUS.

4

**0 000 264**

Example 3

The process of Example 2 was repeated using the calcium hydroxide of Example 1 and including 7.5 wt.% water based on the weight of calcium hydroxide. The time for which the mixture was held at about 30°C before filtration was varied with the following results:—

| Time at 30°C | Filterability Rate Kg/H/M² |
|---|---|
| 0 | 53 |
| 1 hour | 66 |
| 2 hours | 67 |

Both the products which had been held at 30°C were clear after filtration by the method of Example 1. In a similar test in which the product was heated to 50°C for 1 hour the filtration rate was only 48.

It was found that the filtration rate was the same whether the diluent oil was added before or after the soaking.

## Claims

1. A process for the production of highly basic calcium sulphonates comprising treating with carbon dioxide the reaction product of mixing
   (i) a sulphonic acid or an alkaline earth metal sulphonate
   (ii) calcium hydroxide
   (iii) a hydrocarbon solvent
   (iv) a $C_1$—$C_3$ alcohol
   (v) water
optionally adding further calcium hydroxide, adding a diluent oil, removing the volatiles and obtaining the product by filtration wherein carbonation is effected at a temperature in the range of 20°C to 35°C, characterised in that the amount of water present at the start of carbonation is from 4 wt.% to 35 wt.% based on the total weight of calcium hydroxide and a stoichiometric excess of calcium hydroxide over that required to react with the sulphonic acid and the carbon dioxide is used.

2. A process according to claim 1 in which the alcohol is methanol.

3. A process according to claim 1 in which from 8 wt.% to 25 wt.% of water is used.

4. A process according to any of the preceding claims in which for every 350 parts by weight of the sulphonic acid from 150 to 350 parts by weight of the alcohol, from 300 to 800 parts by weight of the hydrocarbon solvent and 180 to 210 parts by weight of calcium hydroxide are used.

5. A process according to any of the preceding claims in which the excess calcium hydroxide constitutes from 5 wt.% to 50 wt.% of the total weight of calcium hydroxide.

6. A process according to any one of the preceding claims in which the reaction mixture is held at a temperature in the range 20°C to 35°C following carbonation and before filtration.

7. A process according to any one of the preceding claims in which the calcium hydroxide contains less than 1 wt.% calcium carbonate.

## Patentansprüche

1. Verfahren zur Herstellung von hochbasischen Calciumsulfonaten, bei dem das durch Mischen von
   (i) Sulfonsäure oder einem Erdalkalimetallsulfonat,
   (ii) Calciumhydroxid,
   (iii) einem Kohlenwasserstoff-Lösungsmittel,
   (iv) einem $C_1$—$C_3$-Alkohol und
   (v) Wasser
erhaltene Reaktionsprodukt mit Kohlendioxid behandelt wird, gegebenenfalls weiteres Calciumhydroxid zugesetzt wird, ein Verdünnungsöl zugesetzt wird, die flüchtigen Bestandteile entfernt werden und das Produkt durch Filtration erhalten wird, wobei die Carbonisierung bei einer Temperatur im Bereich von 20 bis 35°C bewirkt wird, dadurch gekennzeichnet, daß die am Beginn der Carbonisierung vorhandene Menge an Wasser, bezogen auf das Gesamtgewicht von Calciumhydroxid, 4 bis 35 Gew.% beträgt und ein stöchiometrischer Überschuß an Calciumhydroxid gegenüber der für die Umsetzung mit der Sulfonsäure und dem Kohlendioxid erforderlichen Menge verwendet wird.

2. Verfahren nach Anspruch 1, dadurch gekennzeichnet, daß der Alkohol Methanol ist.

3. Verfahren nach Anspruch 1, dadurch gekennzeichnet, daß 8 bis 25 Gew.% Wasser verwendet werden.

4. Verfahren nach jedem der vorangegangenen Ansprüche, dadurch gekennzeichnet, daß auf

5

jeweils 350 Gewichtsteile der Sulfonsäure 150 bis 350 Gewichsteile des Alkohols, 300 bis 800 Gewichsteile des Kohlenwasserstofflösungsmittels und 180 bis 210 Gewichsteile Calciumhydroxid verwendet werden.

5. Verfahren nach jedem der vorangegangenen Ansprüche, dadurch gekennzeichnet, daß das überschüssige Calciumhydroxid 5 bis 50 Gewichtsprozent des Gesamtgewichts des Calciumhydroxids ausmacht.

6. Verfahren nach jedem der vorangegangenen ansprueche, dadurch gekennzeichnet, dass das reaktionsgemisch nach der carbonisierung und vor der filtration auf einer temperatur in bereich von 20 bis 35 grade C gehalten wird.

7. Verfahren nach jedem der vorangegangen ansprueche, dadurch gekennzeichnet, dass das calciumhydroxid weniger als 1 gew.% calciumcarbonat enthaelt.

**Revendications**

1. Procédé de production de sulfonates de calcium fortement basiques, consistant à traiter à l'anhydride carbonique le produit réactionnel obtenu en mélangeant

(i) un acide sulfonique ou un sulfonate de métal alcalino-terreux

(ii) de l'hydroxyde de calcium

(iii) un solvant hydrocarboné

(iv) un alcool en $C_1$—$C_3$

(v) de l'eau

en ajoutant éventuellement un supplément d'hydroxyde de calcium, en ajoutant une huile de dilution, en chassant les matières volatiles et en recueillant le produit par filtration, dans lequel la carbonatation est effectuée à une température comprise dans la plage de 20 à 35°C, caractérisé en ce que la quantité d'eau présente au début de la carbonation va de 4 à 35% en piods sur la base du poids total d'hydroxyde de calcium et un excès stoechiométrique d'hydroxyde de calcium par rapport à la quantité nécessaire pour réagir avec l'acide sulfonique et l'anhydride carbonique est utilisé.

2. Procédé suivant la revendication 1, dans lequel l'alcool est le méthanol.

3. Procédé suivant la revendication 1, dans lequel on utilise 8 à 25% en poids d'eau.

4. Procédé suivant l'une quelconque des revendications précédentes, dans lequel on utilise pour 350 parties en poids d'acide sulfonique, 150 à 350 parties en poids de l'alcohol, 300 à 800 parties en poids du solvant hydrocarboné et 180 à 210 parties en poids d'hydroxyde de calcium.

5. Procédé suivant l'une quelconque des revendications précédentes, dans lequel l'hydroxyde de calcium en excès constitue 5 à 50% en poids du poids total d'hydroxyde de calcium.

6. Procede suivant l'une quelconque des revendications precedentes, dans lequel le melange reactionnel est maintenu a une temperature comprise dans la plage de 20 a 35 degres c apres la carbonation et avant la filtration.

7. Procede suivant l'une quelconque des revendications precedentes, dans lequel l'hydroxyde de calcium contient moins de 1% en poids de carbonate de calcium.